# EUROPÄISCHE PATENTSCHRIFT

(11) **EP 3 924 741 B1**
(45) Veröffentlichungstag und Bekanntmachung des Hinweises auf die Patenterteilung: **23.08.2023**
(21) Anmeldenummer: 20701540.5
(22) Anmeldetag: 14.01.2020
(51) Int. Cl.: G01P 21/02, G01P 5/20, G01P 5/26, G01S 17/58, G06T 7/80, G01S 7/497

(54) **VERFAHREN ZUR KALIBRIERUNG EINER PIV MESSANORDNUNG**
METHOD FOR CALIBRATING A PIV MEASUREMENT ARRANGEMENT
PROCÉDÉ D'ÉTALONNAGE D'UN ENSEMBLE DE MESURE PIV

(30) Priorität: 12.02.2019 DE 102019103441
(43) Veröffentlichungstag der Anmeldung: 22.12.2021
(73) Patentinhaber: Voith Patent GmbH, 89522 Heidenheim (DE)
(72) Erfinder: BECK, Johannes, 73485 Unterschneidheim (DE)
(74) Vertreter: Voith Patent GmbH - Patentabteilung
(86) Internationale Anmeldenummer: PCT/EP2020/050774
(87) Internationale Veröffentlichungsnummer: WO 2020/164830

(56) Entgegenhaltungen:
- WO-A1-2018/207032
- CN-A- 109 166 154
- PRASAD A K: "STEREOSCOPIC PARTICLE IMAGE VELOCIMETRY", EXPERIMENTS IN FLUIDS, SPRINGER, HEIDELBERG, DE, Bd. 29, Nr. 2, 1. August 2000 (2000-08-01) , Seiten 103-115, XP001500713, ISSN: 0723-4864, DOI: 10.1007/S003480000143
- BETHEA M D ET AL: "THREE-DIMENSIONAL CAMERA CALIBRATION TECHNIQUE FOR STEREO IMAGING VELOCIMETRY EXPERIMENTS", OPTICAL ENGINEERING, SOC. OF PHOTO-OPTICAL INSTRUMENTATION ENGINEERS, BELLINGHAM, Bd. 36, Nr. 12, 1. Dezember 1997 (1997-12-01), Seiten 3445-3454, XP000731405, ISSN: 0091-3286, DOI: 10.1117/1.601584

## Beschreibung

Die vorliegende Erfindung betrifft ein Verfahren zur Kalibrierung einer PIV Messanordnung.

Mit Hilfe des PIV Messverfahrens ("Particle Image Velocimetry") können die Strömungsverhältnisse eines Gases oder eines anderen Fluids, wie z.B. Wasser, im dreidimensionalen Raum ermittelt werden. Eine PIV Messanordnung umfasst dabei eine Lichtquelle und wenigstens zwei Kameras. Als Lichtquelle dient meistens ein Laser, wobei die Lichtquelle bei der Durchführung einer Messung zum Einsatz kommt. In das Fluid werden Partikel beigegeben, die der Strömung folgen. Die Beobachtung der Partikelpositionen zu zwei Zeitpunkten aus unterschiedlichen Blickwinkeln, ermöglicht es, Geschwindigkeiten zu berechnen. Vor der Durchführung einer Messung muss die Messanordnung kalibriert werden, um eine eindeutige Zuordnung von Bildkoordinaten zu physikalischen Koordinaten zu ermöglichen. Für die Kalibrierung wird gewöhnlich eine Kalibrierplatte mit einer Vielzahl von Markierungen mit bekannter räumlicher Lage verwendet, welche in der Messanordnung an geeigneter Stelle angebracht wird. Nun werden mit den Kameras Kalibrieraufnahmen von der Kalibrierplatte erzeugt, welche für die Grob- bzw. vorläufige Kalibrierung verwendet werden. Nach der Grobkalibrierung erfolgen gewöhnlich weitere Kalibrierungsschritte, wie z.B. eine Selbstkalibrierung. Verfahren zur Kalibrierung einer PIV Messanordnung sind aus dem Stand der Technik bekannt. Es sei beispielhaft auf die WO 2018/207032 A1 und die EP 1 460 433 A2 und die CN 109 166 154 A verwiesen.

Da der Aufwand für die beschriebene Grobkalibrierung hoch ist, wurden Verfahren zur Kalibrierung vorgeschlagen, bei denen keine Kalibrierplatte benötigt wird. Hierzu sei wiederum auf die EP 1 460 433 A2 verwiesen.

Der Erfinder hat sich die Aufgabe gestellt, ein alternatives Verfahren zur Kalibrierung einer PIV Messanordnung anzugeben, bei dem keine Kalibrierplatte benötigt wird und das sich durch geringen Aufwand auszeichnet.

Die gestellte Aufgabe wird durch ein Verfahren mit den Merkmalen des unabhängigen Anspruchs gelöst. Vorteilhafte Ausführungsformen ergeben sich aus den davon abhängigen Unteransprüchen.

Die erfindungsgemäße Lösung wird nachfolgend anhand von Figuren erläutert. Darin ist im Einzelnen folgendes dargestellt:
- Figur 1: Kalibrierung einer PIV Messanordnung gemäß dem Stand der Technik;
- Figur 2: Erfindungsgemäße Kalibrierung einer PIV Messanordnung;
- Figur 3: Ablaufdiagramm des erfindungsgemäßen Verfahrens zur Kalibrierung einer PIV Messanordnung.

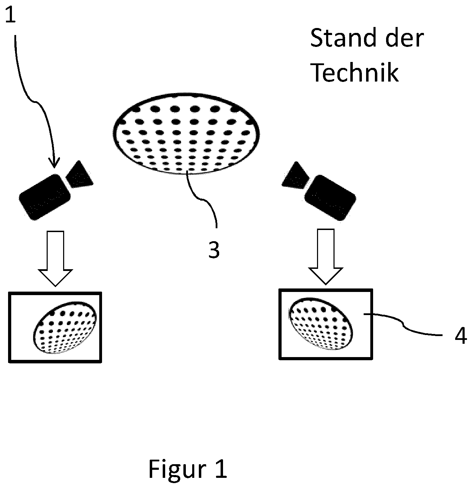

Figur 1 zeigt in schematischer Weise die Kalibrierung einer PIV Messanordnung gemäß dem Stand der Technik. Die PIV Messanordnung umfasst dabei wenigstens zwei Kameras, von denen eine mit 1 bezeichnet ist. Zu einer PIV Messanordnung gehört selbstverständlich immer auch eine sogenannte Szenerie, d.h. der zu untersuchendende von einem Medium durchströmte Bereich und ggf. diesen begrenzende Glasflächen, Wände zur Begrenzung des Szenerie in der Tiefe und u.U. auch andere Bereiche, die an den zu untersuchenden Bereich angrenzen. Wenn im Folgenden von einer PIV Messanordnung gesprochen wird, so wird immer auch die Szenerie mitverstanden, ohne dass das explizit erwähnt wird. Zur Kalibrierung der PIV Messanordnung, wird eine Kalibrierplatte so angeordnet, dass sie sich im Blickfeld der Kameras 1 befindet. In Figur 1 ist die Kalibrierplatte mit 3 bezeichnet. Dann werden Bilder mit den Kameras 1 aufgenommen. Die resultierenden Aufnahmen sind in Figur 1 unterhalb den Kameras 1 dargestellt, wobei eine der Aufnahmen mit 4 bezeichnet ist. Es sei noch erwähnt, dass je nach den vorliegenden Lichtverhältnissen für die Erzeugung der Kalibrieraufnahmen eine zusätzliche Lichtquelle zum Einsatz kommen kann (oder auch nicht, falls das Umgebungslicht hierzu ausreicht). Der oben erwähnte Laser, welcher für die Durchführung der eigentlichen Messung verwendet wird, ist dazu in der Regel nicht geeignet.

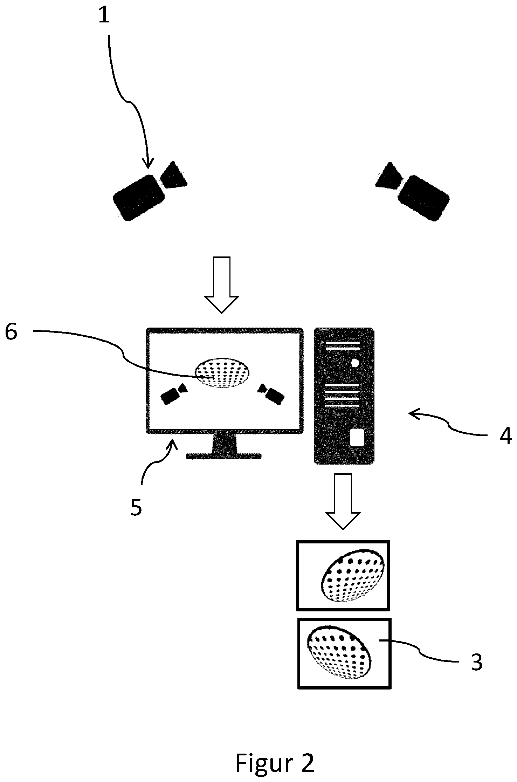

Figur 2 zeigt in schematischer Weise die erfindungsgemäße Kalibrierung einer PIV Messanordnung. Dabei ist im oberen Bereich von Figur 2 die PIV Messanordnung analog zu Figur 1 dargestellt. Im Gegensatz zum Stand der Technik, wird keine Kalibrierplatte benötigt. Stattdessen wird ein Computersystem benötigt, welches in Figur 1 schematisch dargestellt und mit 4 bezeichnet ist. Ein solches Computersystem wird in der Regel für die Durchführung einer PIV Messung ohnehin benötigt. Das Computersystem wir dazu verwendet, um ein dreidimensionales Computermodell der PIV Messanordnung zu erstellen, welches im Monitor des Computersystems angedeutet ist und mit 5 bezeichnet ist. Teil des Computermodells ist auch eine Kalibrierplatte, welche mit 6 bezeichnet ist. Da diese Kalibrierplatte 6 kein reales Gegenstück besitzt, handelt es sich um eine virtuelle Kalibrierplatte 6. Die virtuelle Kalibrierplatte 6 ist dabei innerhalb des Computermodells so ausführt und angeordnet, wie die reale Kalibrierplatte 3 bei der Kalibrierung gemäß dem Stand der Technik. Das dreidimensionale Computermodell 5 mit virtueller Kalibrierplatte 6 kann beispielsweise mit Hilfe von gängigen CAD-Programmen erzeugt werden. Ein solches Modell (ohne die virtuelle Kalibrierplatte 6) wird in vielen Fällen ohnehin für die Planung und Durchführung einer PIV Messung benötigt. Dadurch hält sich der Mehraufwand für diesen Schritt des erfindungsgemäßen Verfahrens in engen Grenzen. Basierend auf dem dreidimensionalen Computermodell 5 samt virtueller Kalibrierplatte 6 werden nun mit Hilfe eines Raytracing-Verfahrens, d.h. mit Hilfe von fotorealistischem Rendering und unter Beachtung der jeweiligen Materialeigenschaften der Szenerie die Bilder der Kameras 1 künstlich erzeugt. Dies kann mit Hilfe des Computersystems 4 oder auch auf anderen Rechnern durchgeführt werden, und ist in Figur 2 im unteren Teil angedeutet, wobei eines der Bilder wiederum mit 3 bezeichnet ist. Im Optimalfall werden die auf diese Weise künstlich erzeugten Bilder 3 genau das wiedergeben, was die Aufnahmen der Kameras 1 gemäß dem herkömmlichen Kalibrierverfahren zeigen würden. Im weiteren Kalibrierverfahren werden die durch das erfindungsgemäße Verfahren künstlich erzeugten Bilder 3 genauso verwendet, wie die gemäß dem herkömmlichen Verfahren erzeugten Aufnahmen.

Die mit den künstlich erzeugten Bildern durchgeführte Kalibrierung wird zunächst als Grobkalibrierung bezeichnet, da diese noch fehlerbehaftet sein kann. Die Fehlerquellen bestehen in Positionierungsunterschieden zwischen realen und künstlichen Kameras in Bezug auf die Lage der künstlichen Kalibrierplatte. Weiterhin können Materialinhomogenitäten und Fertigungstoleranzen zu Abweichungen zwischen den künstlich erzeugten Bildern und den realen Aufnahmen führen. Dabei ist anzumerken, dass auch beim herkömmlichen Verfahren mit den realen Aufnahmen Fehlermöglichkeiten bestehen. So ist z.B. die genaue Positionierung der Kalibrierplatte sehr wichtig. In jedem Fall werden diese Fehler durch auf die Grobkalibrierung folgende weitere Kalibrierschritte minimiert bzw. eliminiert.

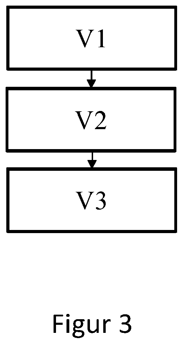

Figur 3 zeigt das Ablaufdiagramm des erfindungsgemäßen Verfahrens zur Kalibrierung einer PIV Messanordnung. Das erfindungsgemäße Verfahren umfasst dabei drei Schritte, welche mit V1, V2 und V3 bezeichnet sind. Im ersten Schritt V1 werden dabei eine PIV Messanordnung bereitgestellt. Im zweiten Schritt V2 wird ein Computersystem bereitgestellt und mit Hilfe des Computersystems ein dreidimensionales Computermodell der PIV Messanordnung erstellt, wobei das Computermodell zusätzlich eine virtuelle Kalibrierplatte umfasst, welche so angeordnet ist, dass sie sich im Blickfeld der Kameras der PIV Messanordnung befindet. Im dritten Schritt V3 werden basierend auf dem Computermodell mit Hilfe eines Raytracing-Verfahrens die Bilder der Kameras künstlich erzeugt. Hinsichtlich der Reihenfolge der Schritte V1 bis V3 ist zu erwähnen, dass die Schritte in der genannten Reihenfolge ausgeführt werden können. Es ist jedoch auch denkbar und vorteilhaft, wenn zuerst im Rahmen der Planung der jeweiligen PIV Messanordnung das Computermodell erzeugt wird, gemäß dem anschließend die Messanordnung bereitgestellt wird. In jedem Fall kann der Schritt V3 erst nach dem Schritt V2 erfolgen.

Wie bereits erwähnt können die im Schritt V3 erzeugten künstlich erzeugten Bilder für die Grobkalibration und weitere Kalibrationsschritte verwendet werden, welche aus dem Stand der Technik bekannt sind.

Aus dem Gesagten ist klar, dass das erfindungsgemäße Verfahren keine reale Kalibrierplatte benötigt. Durch die Verwendung von gängigen Modellierungs- und Raytracing-Rechenverfahren hält sich der Aufwand für die Durchführung in engen Grenzen.

## Patentansprüche

1. Verfahren zur Kalibrierung einer PIV Messanordnung, wobei die Messanordnung wenigstens zwei Kameras (1) umfasst, und das Verfahren drei Schritte (V1, V2, V3) umfasst, wobei im ersten Schritt (V1) die Messanordnung bereitgestellt wird, und wobei im zweiten Schritt (V2) ein Computersystem (4) bereit gestellt und mit Hilfe des Computersystems (4) ein dreidimensionales Computermodell (5) der Messanordnung erstellt wird, **dadurch gekennzeichnet, dass** das Computermodell (5) eine virtuelle Kalibrierplatte (6) und künstliche Kameras (1) umfasst, welche innerhalb des Computermodells (5) so angeordnet sind, dass sich die virtuelle Kalibrierplatte (6) im Blickfeld der künstlichen Kameras (1) befindet, und wobei im dritten Schritt (V3) basierend auf dem Computermodell (5) mit Hilfe eines Raytracing-Verfahrens die Bilder (3) der künstlichen Kameras (1) künstlich erzeugt und zur Kalibrierung verwendet werden, so dass keine reale Kalibrierplatte zur Kalibrierung benötigt wird.

2. Verfahren nach Anspruch 1, wobei das Computermodell (5) mit Hilfe eines CAD-Rechenprogramms erzeugt wird.

3. Verfahren nach Anspruch 1 oder 2, wobei das Raytracing-Verfahren mit Hilfe des Computersystems (4) durchgeführt wird.

4. Verfahren nach einem der Ansprüche 1 bis 3, wobei die Schritte (V1, V2, V3) in der Reihenfolge V1, V2, V3 ausgeführt werden.

5. Verfahren nach einem der Ansprüche 1 bis 3, wobei die Schritte (V1, V2, V3) in der Reihenfolge V2, V1, V3 ausgeführt werden.

6. Verfahren nach einem der Ansprüche 1 bis 3, wobei die Schritte (V1, V2, V3) in der Reihenfolge V2, V3, V1 ausgeführt werden.

## Claims

1. A method for calibrating a PIV measurement arrangement, wherein the measurement arrangement comprises at least two cameras (1), and the method comprises three steps (V1, V2, V3), wherein in the first step (V1) the measurement arrangement is provided, and wherein in the second step (V2) a computer system (4) is provided and a three-dimensional computer model (5) of the measurement arrangement is created with the aid of the computer system (4), **characterized in in that** the computer model (5) comprises a virtual calibration plate (6) and artificial cameras (1) which are arranged within the computer model (5) in such a way that the virtual calibration plate (6) is located in the field of view of the artificial cameras (1) and wherein in the third step (V3), based on the computer model (5), the images (3) of the artificial cameras (1) are artificially generated with the aid of a ray tracing method and used for calibration, so that no real calibration plate is required for calibration.

2. The method according to claim 1, wherein the computer model (5) is generated with the aid of a CAD computer program.

3. Method according to claim 1 or 2, wherein the ray tracing method is performed with the aid of the computer system (4).

4. The method of any one of claims 1 to 3, wherein the steps (V1, V2, V3) are performed in the order V1, V2, V3.

5. The method of any one of claims 1 to 3, wherein the steps (V1, V2, V3) are performed in the order V2, V1, V3.

6. The method of any one of claims 1 to 3, wherein the steps (V1, V2, V3) are performed in the order V2, V3, V1.

## Revendications

1. Procédé de calibrage d'un dispositif de mesure PIV, le dispositif de mesure comprenant au moins deux caméras (1), et le procédé comprenant trois étapes (V1, V2, V3), dans lequel, dans la première étape (V1), le dispositif de mesure est mis à disposition, et dans lequel, dans la deuxième étape (V2), un système informatique (4) est mis à disposition et, à l'aide du système informatique (4), un modèle informatique tridimensionnel (5) du dispositif de mesure est créé, **caractérisé, en ce que** le modèle informatique (5) comprend une plaque d'étalonnage virtuelle (6) et des caméras artificielles (1) qui sont disposées à l'intérieur du modèle informatique (5) de telle sorte que la plaque d'étalonnage virtuelle (6) se trouve dans le champ de vision des caméras artificielles (1), et dans lequel, dans la troisième étape (V3), sur la base du modèle informatique (5), les images (3) des caméras artificielles (1) sont générées artificiellement à l'aide d'une procédure de ray tracing et utilisées pour le calibrage, de sorte qu'aucune plaque d'étalonnage réelle n'est nécessaire pour le calibrage.

2. Procédure selon la revendication 1, dans laquelle le modèle informatique (5) est généré à l'aide d'un programme de calcul CAO.

3. Procédé selon la revendication 1 ou 2, dans lequel la procédure de ray tracing est effectuée à l'aide du système informatique (4).

4. Procédé selon l'une quelconque des revendications 1 à 3, dans lequel les étapes (V1, V2, V3) sont réalisées dans l'ordre V1, V2, V3.

5. Procédé selon l'une quelconque des revendications 1 à 3, dans lequel les étapes (V1, V2, V3) sont réalisées dans l'ordre V2, V1, V3.

6. Procédé selon l'une quelconque des revendications 1 à 3, dans lequel les étapes (V1, V2, V3) sont réalisées dans l'ordre V2, V3, V1.
